# EUROPEAN PATENT APPLICATION

(11) **EP 4 258 104 A1**
(43) Date of publication of application: **11.10.2023**
(21) Application number: 20967882.0
(22) Date of filing: 31.12.2020
(51) Int. Cl.: G06F 8/65, G06N 20/00

(54) **METHOD AND APPARATUS FOR TRANSMITTING MODEL DATA**

(71) Applicant: Huawei Technologies Co., Ltd., Shenzhen, Guangdong 518129 (CN)
(72) Inventor: YAN, Wen, Shenzhen, Guangdong 518129 (CN); WANG, Chujie, Shenzhen, Guangdong 518129 (CN); YU, Yijun, Shenzhen, Guangdong 518129 (CN); HUANG, Xietian, Shenzhen, Guangdong 518129 (CN)
(74) Representative: MERH-IP Matias Erny Reichl Hoffmann Patentanwälte PartG mbB
(86) International application number: PCT/CN2020/142454
(87) International publication number: WO 2022/141544

(57) **Abstract**

This application provides a model data sending method and an apparatus. The method can reduce an accuracy loss of model data, and includes: A first device determines second information based on first information, where the second information is used by a second device to quantize first model data, the first information includes an evaluation loss corresponding to a current round of training, the second information includes a quantization error threshold, and the first model data is model data that is after the current round of training; the first device sends the second information to the second device; and the first device receives a first message sent by the second device, where the first message includes quantized first model data and first quantization configuration information.

## Description

### TECHNICAL FIELD

This application relates to the communication field, and more specifically, to a model data sending method and an apparatus.

### BACKGROUND

Federated learning is an encrypted distributed machine learning technology. It can fully utilize data and computing capabilities of participants, enabling a plurality of parties to build a common and robust machine learning model without sharing data. In an increasingly strict data supervision environment, federated learning can resolve key problems such as data ownership, data privacy, data access rights, and heterogeneous data access. In a wireless scenario, to ensure data security, a model may be trained in a federated learning manner. Horizontal federated learning is a key branch of federated learning. A horizontal federation includes a coordinator and several participants. The participants are responsible for model training using local data, and the coordinator is responsible for aggregating models of all participants.

In horizontal federated learning, although a participant does not need to transmit original training data to a server, the participant needs to send a model parameter to the coordinator for a plurality of times, which causes large communication overheads. A model quantization technology can alleviate a problem of a large quantity of model parameters and high memory usage, and may be applied to a horizontal federated learning process to reduce communication overheads.

However, quantization causes a quantization error, and may cause an accuracy loss of a finally trained model. In particular, in federated learning, different from a conventional quantized model that is directly for inference, a quantized model in federated learning is still for model training, and quantization errors of a plurality of rounds and a plurality of users are continuously accumulated.

### SUMMARY

This application provides a model data sending method and an apparatus, to reduce an accuracy loss of model data.

According to a first aspect, a model data sending method is provided. The method includes: A first device determines second information based on first information, where the second information is used by a second device to quantize first model data, the first information includes an evaluation loss corresponding to a current round of training, the second information includes a quantization error threshold, and the first model data is model data that is after the current round of training; the first device sends the second information to the second device; and the first device receives a first message sent by the second device, where the first message includes quantized first model data and first quantization configuration information.

Based on the foregoing technical solution, the first device may determine the quantization error threshold based on the evaluation loss, information about an accuracy requirement of the second device for model training, and communication sensitivity information, so that a quantization error corresponding to a quantization manner used by the second device is less than the quantization error threshold, and accumulation of multi-round multi-user quantization errors in federated learning training can be controlled, thereby reducing an accuracy loss of model data.

With reference to the first aspect, in some implementations of the first aspect, the first information further includes information about an accuracy requirement of the second device for model training and communication sensitivity information.

With reference to the first aspect, in some implementations of the first aspect, before that a first device determines second information based on first information, the method further includes: The first device receives a second message sent by the second device, where the second message includes information about the accuracy requirement and the communication sensitivity information.

With reference to the first aspect, in some implementations of the first aspect, before that a first device determines second information based on first information, the method further includes: The first device determines a proportion of quantifiable layers in second model data based on third information, where the third information includes an evaluation loss corresponding to a previous round of training, the information about the accuracy requirement, and the communication sensitivity information, and the second model data is model data that is before the current round of training; the first device quantizes the second model data based on the proportion of the quantifiable layers, to obtain quantized second model data; and the first device sends a third message to the second device, where the third message includes the quantized second model data and second quantization configuration information, and the third message is used by the second device to train the second model data to obtain the first model data.

According to a second aspect, a model data sending method is provided. The method includes: A second device receives second information sent by a first device, where the second information is used by the second device to quantize first model data, the second information includes a quantization error threshold, and the first model data is model data that is after a current round of training; the second device quantizes the first model data based on the second information; and the second device sends a first message to the first device, where the first message includes quantized first model data and first quantization configuration information.

With reference to the second aspect, in some implementations of the second aspect, that the second device quantizes the first model data based on the second information includes: The second device quantizes the first model data in a first quantization manner; the second device determines a first quantization error based on quantized first model data and the first model data that is before the quantization; and if the first quantization error is less than the quantization error threshold, the second device determines to use the first quantization manner to quantize the first model data.

With reference to the second aspect, in some implementations of the second aspect, before that a second device receives second information sent by a first device, the method further includes: The second device receives a third message sent by the first device, where the third message includes quantized second model data and second quantization configuration information, and the second model data is model data that is before the current round of training; the second device performs dequantization parsing based on the quantized second model data and the second quantization configuration information to obtain the second model data; and the second device trains the second model data, to obtain the first model data.

According to a third aspect, another model data sending method is provided. The method includes: A first device receives a fourth message sent by a second device, where the fourth message includes a first quantization error and first information, the first quantization error is determined after the second device quantizes first model data in a first quantization manner, the first information includes an evaluation loss corresponding to a current round of training, and the first model data is model data that is after the current round of training; the first device determines, based on the first quantization error and the first information, whether the second device is allowed to send quantized first model data; and the first device sends indication information to the second device, where the indication information indicates whether the second device is allowed to send the quantized first model data.

Based on the foregoing technical solution, the first device determines, based on the evaluation loss corresponding to the current round of training and the first quantization error determined after the second device quantizes the first model data, and indicates whether the second device can send the quantized first model data, so that excessive accumulation of the first quantization error of the second device can be avoided, thereby reducing an accuracy loss of model data.

With reference to the third aspect, in some implementations of the third aspect, that the first device determines, based on the first quantization error and the first information, whether the second device is allowed to send quantized first model data includes: The first device determines a proportion of quantifiable second devices based on the first information; and the first device determines, based on the proportion of the quantifiable second devices, the first quantization error, and a threshold for a quantity of consecutive quantization times, whether the second device is allowed to send the quantized first model data.

The first device determines, based on the evaluation loss corresponding to the current round of training, the first quantization error determined after the second device quantizes the first model data, and the threshold for the quantity of consecutive quantization times, and indicates whether the second device can send the quantized first model data, so that the second device can be prevented from performing quantization for a quantity of times exceeding the threshold for the quantity of consecutive quantization times, to reduce an accuracy loss of model data.

With reference to the third aspect, in some implementations of the third aspect, the first information further includes information about an accuracy requirement of the second device for model training and communication sensitivity information.

With reference to the third aspect, in some implementations of the third aspect, before that a first device receives a fourth message sent by a second device, the method further includes: The first device receives a second message sent by the second device, where the second message includes information about the accuracy requirement and the communication sensitivity information.

With reference to the third aspect, in some implementations of the third aspect, before that a first device receives a fourth message sent by a second device, the method further includes: The first device determines a proportion of quantifiable layers in second model data based on third information, where the third information includes an evaluation loss corresponding to a previous round of training, the information about the accuracy requirement, and the communication sensitivity information, and the second model data is model data that is before the current round of training; the first device quantizes the second model data based on the proportion of the quantifiable layers, to obtain quantized second model data; and the first device sends a third message to the second device, where the third message includes the quantized second model data and second quantization configuration information, and the third message is used by the second device to train the second model data to obtain the first model data.

According to a fourth aspect, another model data sending method is provided. The method includes: A second device quantizes first model data in a first quantization manner, where the first model data is model data that is after a current round of training; the second device determines a first quantization error based on quantized first model data and the first model data that is before the quantization; and the second device sends a fourth message to a first device, where the fourth message includes the first quantization error and first information, the fourth message is used by the first device to determine whether the second device is allowed to send the quantized first model data, and the first information includes an evaluation loss corresponding to the current round of training; the second device receives indication information sent by the first device, where the indication information indicates whether the second device is allowed to send the quantized first model data; and the second device determines, based on the indication information, whether to send the quantized first model data to the first device.

With reference to the fourth aspect, in some implementations of the fourth aspect, that the second device determines, based on the indication information, whether to send the quantized first model data to the first device includes: If the indication information indicates that the second device is allowed to send the quantized first model data, the second device sends the quantized first model data and third quantization configuration information to the first device; or if the indication information indicates that the second device is not allowed to send the quantized first model data, the second device sends the first model data that is unquantized.

With reference to the fourth aspect, in some implementations of the fourth aspect, before that a second device quantizes first model data in a first quantization manner, the method further includes: The second device receives a third message sent by the first device, where the third message includes quantized second model data and second quantization configuration information, and the second model data is model data that is before the current round of training; the second device performs dequantization parsing based on the quantized second model data and the second quantization configuration information to obtain the second model data; and the second device trains the second model data, to obtain the first model data.

According to a fifth aspect, another model data sending method is provided. The method includes: A first device determines a proportion of quantifiable layers in second model data based on third information, where the third information includes an evaluation loss corresponding to a previous round of training, information about an accuracy requirement of a second device for model training, and communication sensitivity information, and the second model data is model data that is before a current round of training; the first device quantizes the second model data based on the proportion of the quantifiable layers, to obtain quantized second model data; and the first device sends a third message to the second device, where the third message includes the quantized second model data and second quantization configuration information, and the third message is used by the second device to train the second model data.

With reference to the fifth aspect, in some implementations of the fifth aspect, that the first device quantizes the second model data based on the proportion of the quantifiable layers includes: The first device quantizes each layer of data in the second model data; the first device determines a quantization error corresponding to each layer of data and a compression amount contributed by each layer of data; the first device determines the quantifiable layers in the second model data based on the proportion of the quantifiable layers, the quantization error corresponding to each layer of data, and/or the compression amount contributed by each layer of data; and the first device obtains the quantized second model data, where data corresponding to the quantifiable layers in the quantized second model data is quantized, and data corresponding to an unquantifiable layer in the quantized second model data is not quantized.

Based on the foregoing technical solution, the first device performs hierarchical quantization on a model delivered to the second device, so that accumulation of multi-round quantization errors can be controlled, thereby reducing an accuracy loss of model data when a transmission amount is reduced.

According to a sixth aspect, a communication apparatus is provided, and includes a unit configured to implement a function of the method in any one of the first aspect to the fifth aspect or the possible implementations of the first aspect to the fifth aspect.

According to a seventh aspect, a communication chip is provided, and includes a processor and a communication interface. The processor is configured to read instructions to perform the method in any one of the first aspect to the fifth aspect or the possible implementations of the first aspect to the fifth aspect.

According to an eighth aspect, a communication device is provided, and includes a processor and a transceiver. The transceiver is configured to: receive computer code or instructions, and transmit the computer code or the instructions to the processor, and the processor runs the computer code or the instructions, to perform the method in any one of the first aspect to the fifth aspect or the possible implementations of the first aspect to the fifth aspect.

According to a ninth aspect, a computer-readable storage medium is provided. The computer-readable medium stores a computer program; and when the computer program is run on a computer, the computer is enabled to perform the method in any one of the first aspect to the fifth aspect or the possible implementations of the first aspect to the fifth aspect.

### BRIEF DESCRIPTION OF DRAWINGS

FIG. 1 is a schematic diagram of a system architecture in which horizontal federated learning is applied in a UE-RAN scenario;
FIG. 2 is a schematic diagram of model quantization;
FIG. 3 is a schematic diagram of horizontal federated learning in a RAN-network management scenario;
FIG. 4 is a schematic diagram of horizontal federated learning in an eNA architecture;
FIG. 5 is a schematic interaction flowchart of a model data sending method according to an embodiment of this application;
FIG. 6 is a schematic interaction flowchart of another model data sending method according to an embodiment of this application;
FIG. 7 is a schematic interaction flowchart of another model data sending method according to an embodiment of this application;
FIG. 8 is a schematic block diagram of a communication apparatus according to an embodiment of this application;
FIG. 9 is a schematic block diagram of another communication apparatus according to an embodiment of this application;
FIG. 10 is a schematic block diagram of another communication apparatus according to an embodiment of this application;
FIG. 11 is a schematic block diagram of another communication apparatus according to an embodiment of this application;
FIG. 12 is a schematic block diagram of another communication apparatus according to an embodiment of this application; and
FIG. 13 is a schematic block diagram of a communication device according to an embodiment of this application.

### DESCRIPTION OF EMBODIMENTS

The following describes technical solutions of this application with reference to accompanying drawings.

The technical solutions of embodiments of this application may be applied to various communication systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system.

The terminal device in embodiments of this application may also be referred to as user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, or a terminal device in a future evolved public land mobile network (public land mobile network, PLMN). This is not limited in embodiments of this application.

A network device in the embodiments of this application may be a device configured to communicate with a terminal device. The network device may be a base transceiver station (base transceiver station, BTS) in a global system for mobile communications (global system of mobile communication, GSM) or a code division multiple access (code division multiple access, CDMA) system, or may be a NodeB (NodeB, NB) in a wideband code division multiple access (wideband code division multiple access, WCDMA) system, or may be an evolved NodeB (evolutional NodeB, eNB or eNodeB) in an LTE system, or may be a radio controller in a scenario of a cloud radio access network (cloud radio access network, CRAN). Alternatively, the network device may be a relay node, an access point, a vehicle-mounted device, a wearable device, a network device in a future 5G network, a network device in a future evolved PLMN network, or the like. This is not limited in the embodiments of this application.

Federated learning is an encrypted distributed machine learning technology. It can fully utilize data and computing capabilities of participants, enabling a plurality of parties to build a common and robust machine learning model without sharing data. In an increasingly strict data supervision environment, federated learning can resolve key problems such as data ownership, data privacy, data access rights, and heterogeneous data access. In a wireless scenario, to ensure data security, a model may be trained in a federated learning manner.

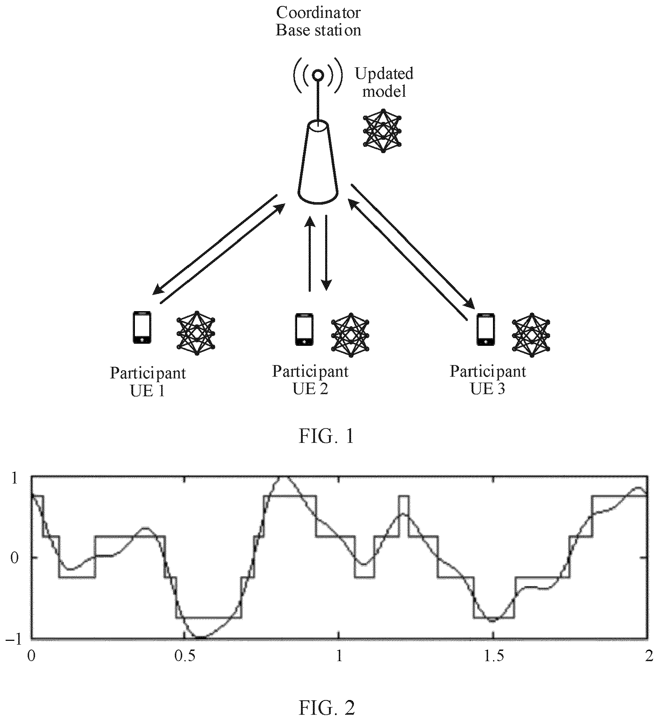

Horizontal federated learning is a key branch of federated learning. A horizontal federation includes a coordinator and several participants. The participants are responsible for model training using local data, and the coordinator is responsible for aggregating models of all participants. FIG. 1 is a schematic diagram of a system architecture in which horizontal federated learning is applied in a user equipment (user equipment, UE)-radio access network (radio access network, RAN) scenario. A horizontal federated learning procedure is generally divided into the following four steps: (1) A coordinator sends a model to each participant. This step is referred to as model delivery. (2) Each participant uses its own dataset to train the model. (3) Each participant sends a trained model parameter to the coordinator. This step is referred to as model uploading. (4) The coordinator aggregates the model parameters received from the participants, for example, using a federated averaging algorithm, and then updates the model. The foregoing process is repeated until the model is converged, a maximum quantity of times is reached, or a maximum quantity of training times is reached.

In horizontal federated learning, the model parameter uploaded by the UE may be a model weight file, that is, a model weight obtained after one or more times of training are performed locally. Transmission forms of the model parameters are aggregated at the coordinator. In an actual horizontal federated learning process, a participant and a coordinator usually agree on a default model parameter transmission form in advance. After completing local model training, the participant transmits a model parameter in an agreed form, so that the coordinator performs aggregation.

In horizontal federated learning, although a participant does not need to transmit original training data to a server, the participant needs to send a model parameter to the coordinator for a plurality of times, which causes large communication overheads. A model quantization technology can alleviate a problem of a large quantity of model parameters and high memory usage, and may be applied to a horizontal federated learning process to reduce communication overheads.

FIG. 2 is a schematic diagram of model quantization (quantization for short). A main principle is to compress an original network by reducing a quantity of bits required to represent a neural network weight. Usually, a deep learning model parameter is a 32-bit floating-point type. A model quantization method may convert a weight of the 32-bit floating-point type into 16 bits, 8 bits, 4 bits, 2 bits, or even 1 bit, to greatly reduce a size of storage space occupied by the network. Usually, a model obtained through processing by using the model quantization method needs to be dequantized and parsed to a proper format, and then can be used for model retraining or model inference.

For ease of understanding of this solution, a model quantization technology in federated learning is briefly described. In federated learning, the model quantization technology is used to compress transmitted model data, to reduce an amount of data transmitted in federated learning training. For example, if 8-bit quantization is used, a single data transmission amount may be reduced to about 1/4 in original 32-bit quantization.

Federated learning involves model uploading and model delivery. Therefore, there are two types of model quantization: quantization of an uploaded model and quantization of a delivered model.

Quantization causes a quantization error, and may cause an accuracy loss of a finally trained model. In particular, in federated learning, different from a conventional quantized model that is directly for inference, a quantized model in federated learning is still for model training, and quantization errors of a plurality of rounds and a plurality of users are continuously accumulated.

Therefore, there is a compromise between an accuracy loss and transmission amount reduction when quantization is used for a transmitted parameter in federated learning.

Currently, in a scenario in which horizontal federated learning is performed between UE and a RAN, the RAN allocates an uplink resource based on an uplink channel condition of the UE, and determines a method for quantizing a model uploaded by the UE. Model data uploaded by each UE is quantized. A purpose of quantization is to reduce a parameter transmission amount. The RAN independently performs, based only on the uplink channel condition, a method for quantizing a parameter uploaded by the UE, without considering accumulation of multi-round multi-user quantization errors in quantization in federated learning training. This may cause a great accuracy loss, and cannot achieve a compromise between the accuracy loss and transmission amount reduction.

Therefore, embodiments of this application provide a model data sending method, to reduce an accuracy loss of model data.

A system architecture to which embodiments of this application are applied is mainly a UE-RAN system architecture defined by the 3rd generation partnership project (3rd generation partnership project, 3GPP). In this scenario, horizontal federation is performed between a plurality of UEs. UE is a participant in a horizontal federation process, and a RAN is a coordinator in the horizontal federation process.

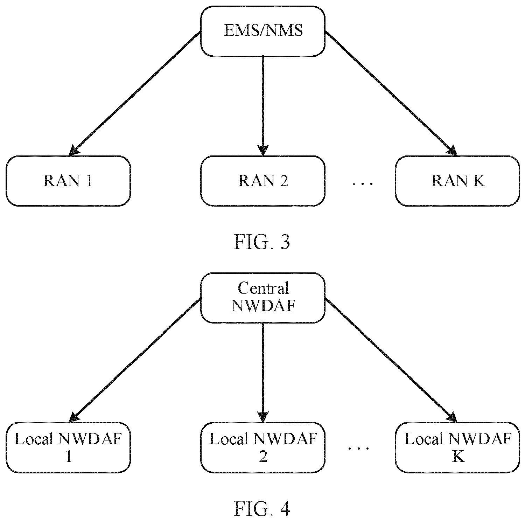

Further, this application may also be extended to another system architecture, for example, horizontal federated learning in a RAN-network management scenario shown in FIG. 3, where network management may be an element management system (element management system, EMS) or a network management system (network management system, NMS), or horizontal federated learning in an enabler of network automation (enabler of network automation, eNA) architecture shown in FIG. 4, where a local network data analytics function (network data analytics function, NWDAF) is a participant in a horizontal federated process, and a central network data analytics function is a coordinator in the horizontal federated process.

The UE and the RAN in this application support artificial intelligence (artificial intelligence, AI) model training. The element management system manages one or more network elements of a specific type. The network management system is configured to manage communication between network elements. The NWDAF is responsible for network data analytics and AI model training.

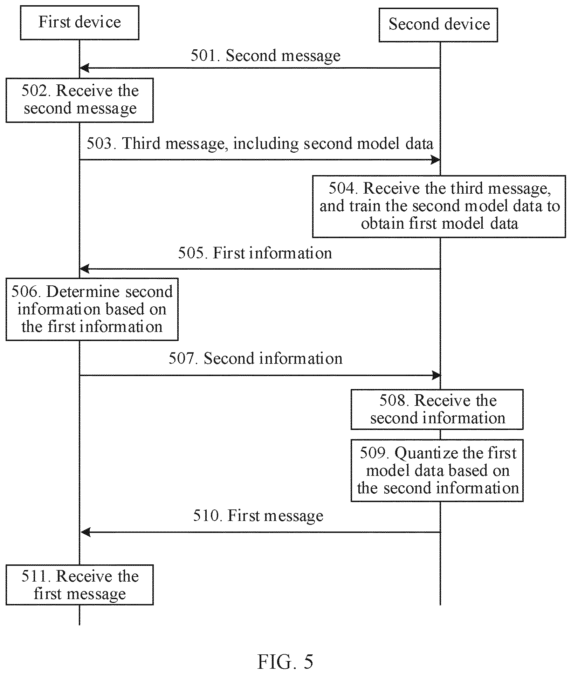

FIG. 5 shows a model data sending method provided in an embodiment of this application. The method is applied to federated learning. The method includes the following steps.

501. A second device sends a registration message to a first device, where the registration message may be referred to as a second message, and the second message includes information about the second device. Optionally, the second message may include model accuracy requirement (accuracy requirement) information and communication sensitivity (communication sensitivity) information of the second device. There may be a plurality of second devices. The first device may be a radio access network device, and the second device may be a terminal device; the first device may be an element management system/network management system, and the second device may be a radio access network device; the first device may be a central network data analytics function, and the second device may be a local network data analytics function; or the like. This is not limited in this embodiment of this application.

An accuracy requirement is an accuracy expectation of a terminal device for a model trained through federated learning. For example, an expected accuracy rate of the trained model can reach 99%, which may be considered as a high accuracy requirement, and an 80% accuracy rate may be considered as a low accuracy requirement. A function of the accuracy requirement is to help a RAN determine how many UEs can be allowed to perform a quantization operation. For example, when most UEs have lower accuracy requirements, more UEs may be allowed to perform quantization; when most UEs have higher accuracy requirements, fewer UEs may be allowed to perform quantization.

Communication sensitivity refers to a degree of convenience of the UE for uploading a model, and is affected by a plurality of factors such as a channel condition and a local uploading capability of the UE. A function of the communication sensitivity is to help a RAN determine how many UEs are allowed to perform a quantization operation. If most UEs have high communication sensitivity, more UEs may be allowed to perform quantization.

502. The first device receives the second message sent by the second device, and selects, based on the second message, the second device to participate in model training.

503. The first device sends a third message to the second device participating in a current round of training, where the third message includes second model data and a model name that are before the current round of training, and is used by the second device to train the second model data that is before the current round of training, to obtain trained first model data.

Specifically, optionally, before the first device sends the third message to the second device, the first device determines a proportion of quantifiable layers in the second model data based on third information. The third information includes evaluation loss information of a previous round of training, information about an accuracy requirement of the second device for a model, and communication sensitivity information. For example, when an evaluation loss in a previous round is high, an accuracy requirement of the second device is low, and communication sensitivity of the second device is high, the first device determines a large proportion of quantifiable layers in the second model data; or when an evaluation loss in a previous round is low, an accuracy requirement of the second device is high, and communication sensitivity of the second device is low, the first device determines a small proportion of quantifiable layers in the second model data. It should be understood that different layers in model data may be understood as different layers in a neural network (neural network, NN). The neural network is an artificial neural network, and is a mathematical model or a computing model that simulates a structure and a function of a biological neural network. The neural network is for estimating or approximating a function, and may complete functions such as classification and regression. Common neural networks include a convolutional neural network, a recursive neural network, and the like.

The first device pre-quantizes each layer of data in the second model data. Optionally, the first device may determine a quantization error corresponding to each layer of data and a compression amount contributed by each layer of data.

Optionally, the first device may determine the quantifiable layers in the second model data based on the determined proportion of the quantifiable layers. For example, if the second model data has a total of six layers, and it is determined that the proportion of the quantifiable layers is 1/2, the first device may determine any three layers as the quantifiable layers.

Optionally, the first device may determine the quantifiable layers in the second model data based on the determined proportion of the quantifiable layers and the quantization error corresponding to each layer of data. Specifically, the first device may determine a layer with a small quantization error as a quantifiable layer based on the proportion of the quantifiable layers.

Optionally, the first device may determine the quantifiable layers in the second model data based on the determined proportion of the quantifiable layers and the compression amount contributed by each layer of data. Specifically, the first device may determine a layer with a large contributed compression amount as a quantifiable layer based on the proportion of the quantifiable layers.

Optionally, the first device may determine the quantifiable layers in the second model data based on the determined proportion of the quantifiable layers, the quantization error corresponding to each layer of data, and the compression amount contributed by each layer of data.

The first device obtains quantized second model data, where data corresponding to the quantifiable layers in the quantized second model data is quantized, and data corresponding to an unquantifiable layer in the quantized second model data is not quantized.

Model data in the third message may be the quantized second model data, and the third message includes second quantization configuration information. The second quantization configuration information is a quantization solution of the second model data, and may include information such as a quantity of quantized bits of each layer, an offset value of each layer, and a scaling factor. The information may help the second device obtain the second model data through dequantization parsing.

A radio access network device performs hierarchical quantization on a model delivered to a terminal device, so that accumulation of multi-round quantization errors can be controlled, thereby reducing an accuracy loss of model data when a transmission amount is reduced.

It should be understood that the second model data that is sent by the first device to the second device and that is before the current round of training may be unquantized, or may be quantized by layer. This is not limited in this application.

504. The second device receives the third message sent by the first device, and trains the second model data by using local data.

Specifically, optionally, if the model data in the third message is the quantized second model data, the second device performs dequantization parsing on the quantized second model data based on the second quantization configuration information, to obtain the second model data. Then, the second device trains the second model data, to obtain the trained first model data.

505. The second device sends a fifth message to the first device, where the fifth message includes first information, and the first information includes evaluation loss information corresponding to the current round of training. The fifth message further includes a model name, a model parameter file size, an amount of data in the current round of training, and the like.

506. The first device receives the fifth message sent by the second device, and the first device determines second information based on the first information in the fifth message. The second information may be a quantization error threshold, and the second information is used by the second device to quantize the first model data.

Specifically, optionally, the first device may determine the quantization error threshold based on an evaluation loss corresponding to the current round of training. The first device may determine a total evaluation loss based on evaluation losses that correspond to the current round of training and that are in fifth messages sent by a plurality of second devices. The total evaluation loss may describe a status of the current round of training. The total evaluation loss may help the RAN determine a proportion of second devices that can be allowed to perform quantization. For example, when the total evaluation loss is high, for example, a magnitude of 10⁻², it indicates that training is not converged. A quantization error tolerance is high, where quantization may also be considered as playing a role of regularization, a large quantity of second devices may be allowed to perform quantization, and the quantization error threshold may be a large value. When the total evaluation loss is low, for example, a magnitude of 10⁻⁵, training is close to convergence or has been converged, and is sensitive to an error caused by quantization. A proportion of second devices that perform quantization needs to be controlled or reduced, and the quantization error threshold may be a small value.

Specifically, optionally, the first device may determine the quantization error threshold based on the evaluation loss corresponding to the current round of training, the information about the accuracy requirement of the second device for model training, and the communication sensitivity information. In other words, the first device determines the quantization error threshold through comprehensive consideration. For example, when the total evaluation loss is high, and each second device has a low accuracy requirement and high communication sensitivity, more second devices need to be allowed to perform quantization, and the quantization error threshold may be a large value. When the total evaluation loss is low, and each second device has a high accuracy requirement and low communication sensitivity, the proportion of second devices that perform quantization needs to be reduced, and the quantization error value may be a small value.

Optionally, the quantization error threshold may be initialized to a specific value, for example, a quantization error corresponding to a second device in the first round of training.

507. The first device sends the second information to the second device. To be specific, the first device notifies the second device of the determined quantization error threshold, so that the second device quantizes, based on the quantization threshold, the first model data that is after the current round of training.

508. The second device receives the second information sent by the first device.

The quantization error threshold is a value. Quantization can be performed only when a quantization error of pre-quantization performed by the second device in a specific manner is less than the value, and quantized model data is uploaded. For example, the quantization error threshold is 0.01. If the quantization error of pre-quantization performed by the second device is 0.1, quantization cannot be performed; or if the quantization error is 0.001, quantization can be performed.

Pre-quantization means that the second device performs quantization in advance in one or more quantization manners, to obtain a model error before and after the quantization. An error criterion may be a mean square error or the like. Herein, it is preset that each second device is allowed to determine a quantization manner by itself.

509. The second device quantizes the first model data based on the second information.

Specifically, the second device pre-quantizes the first model data in a first quantization manner, and determines a first quantization error based on quantized first model data and the first model data that is before the quantization. If the first quantization error is less than the quantization error threshold, the second device determines to use the first quantization manner to quantize the first model data. If the first quantization error is greater than or equal to the quantization error threshold, the second device determines not to use the first quantization manner to quantize the first model data. It should be understood that the second device may quantize the first model data in a plurality of quantization manners. When a quantization error corresponding to a specific quantization manner is less than the quantization error threshold, the second device may quantize the first model data in the quantization manner. If a quantization error corresponding to any quantization manner used by the second device is greater than or equal to the quantization error threshold, the second device does not quantize the first model data.

510. The second device sends a first message to the first device, where the first message includes the quantized first model data and first quantization configuration information, and the first quantization configuration information is used by the first device to perform dequantization parsing on the quantized first model data. The first quantization configuration information includes a quantity of quantized bits of the model data, uniform quantization or non-uniform quantization, a quantized zero point, an offset value, a scaling factor, and the like.

511. The first device receives the first message sent by the second device, and performs dequantization parsing on the quantized first model data in the first message, to obtain model data that facilitates subsequent model aggregation, for example, obtain 32-bit floating-point model data through parsing.

After the first device collects model parameter files uploaded by all second devices participating in the current round of training or after a maximum time limit is reached, the first device aggregates, by using an aggregation algorithm such as a federated averaging algorithm, the parameter files uploaded by the second devices, to update a model parameter.

The first device determines whether a training stop condition is met. If the training stop condition is not met, step 503 is returned to perform a next round of training and aggregation procedure. Otherwise, the current procedure ends.

Based on the technical solution provided in this embodiment of this application, the first device may determine the quantization error threshold based on the evaluation loss, information about an accuracy requirement of the second device for model training, and communication sensitivity information, so that a quantization error corresponding to a quantization manner used by the second device is less than the quantization error threshold, and accumulation of multi-round multi-user quantization errors in FL training can be controlled, thereby reducing an accuracy loss of model data.

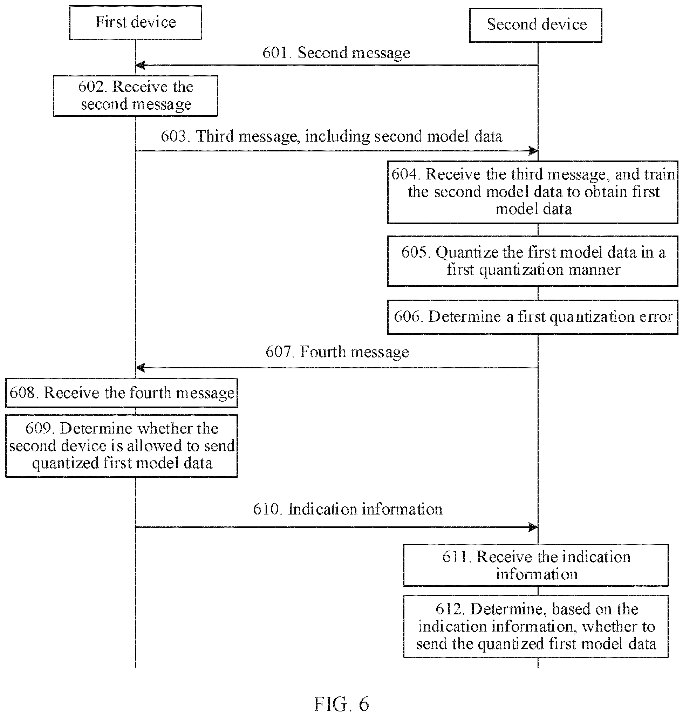

FIG. 6 shows another model data sending method provided in an embodiment of this application. The method is applied to federated learning. The method includes the following steps.

601. A second device sends a registration message to a first device, where the registration message may be referred to as a second message, and the second message includes information about the second device. Optionally, the second message may include model accuracy requirement (accuracy requirement) information and communication sensitivity (communication sensitivity) information of the second device. There may be a plurality of second devices. The first device may be a radio access network device, and the second device may be a terminal device; the first device may be an element management system/network management system, and the second device may be a radio access network device; the first device may be a central network data analytics function, and the second device may be a local network data analytics function; or the like. This is not limited in this embodiment of this application.

602. The first device receives the second message sent by the second device, and selects, based on the second message, the second device to participate in model training.

603. The first device sends a third message to the second device participating in a current round of training, where the third message includes second model data and a model name that are before the current round of training, and is used by the second device to train the second model data that is before the current round of training, to obtain trained first model data.

Specifically, optionally, before the first device sends the third message to the second device, the first device may determine a proportion of quantifiable layers in the second model data based on third information. The third information includes evaluation loss information of a previous round of training, information about an accuracy requirement of the second device for a model, and communication sensitivity information. For example, when an evaluation loss in a previous round is high, an accuracy requirement of the second device is low, and communication sensitivity of the second device is high, the first device determines a large proportion of quantifiable layers in the second model data; or when an evaluation loss in a previous round is low, an accuracy requirement of the second device is high, and communication sensitivity of the second device is low, the first device determines a small proportion of quantifiable layers in the second model data.

It should be understood that different layers in model data may be understood as different layers in a neural network (neural network, NN). The neural network is an artificial neural network, and is a mathematical model or a computing model that simulates a structure and a function of a biological neural network. The neural network is for estimating or approximating a function, and may complete functions such as classification and regression. Common neural networks include a convolutional neural network, a recursive neural network, and the like.

The first device pre-quantizes each layer of data in the second model data. Optionally, the first device may determine a quantization error corresponding to each layer of data and a compression amount contributed by each layer of data.

Optionally, the first device may determine the quantifiable layers in the second model data based on the determined proportion of the quantifiable layers. For example, if the second model data has a total of six layers, and it is determined that the proportion of the quantifiable layers is 1/2, the first device may determine any three layers as the quantifiable layers.

Optionally, the first device may determine the quantifiable layers in the second model data based on the determined proportion of the quantifiable layers and the quantization error corresponding to each layer of data. Specifically, the first device may determine a layer with a small quantization error as a quantifiable layer based on the proportion of the quantifiable layers.

Optionally, the first device may determine the quantifiable layers in the second model data based on the determined proportion of the quantifiable layers and the compression amount contributed by each layer of data. Specifically, the first device may determine a layer with a large contributed compression amount as a quantifiable layer based on the proportion of the quantifiable layers.

Optionally, the first device may determine the quantifiable layers in the second model data based on the determined proportion of the quantifiable layers, the quantization error corresponding to each layer of data, and the compression amount contributed by each layer of data.

The first device obtains quantized second model data, where data corresponding to the quantifiable layers in the quantized second model data is quantized, and data corresponding to an unquantifiable layer in the quantized second model data is not quantized.

Model data in the third message may be the quantized second model data, and the third message includes second quantization configuration information. The second quantization configuration information is a quantization solution of the second model data, and may include information such as a quantity of quantized bits of each layer, an offset value of each layer, and a scaling factor. The information may help the second device obtain the second model data through dequantization parsing.

A radio access network device performs hierarchical quantization on a model delivered to a terminal device, so that accumulation of multi-round quantization errors can be controlled, thereby reducing an accuracy loss of model data when a transmission amount is reduced.

It should be understood that the second model data that is sent by the first device to the second device and that is before the current round of training may be unquantized, or may be quantized by layer. This is not limited in this application.

604. The second device receives the third message sent by the first device, and trains the second model data by using local data.

Specifically, optionally, if the model data in the third message is the quantized second model data, the second device performs dequantization parsing on the quantized second model data based on the second quantization configuration information, to obtain the second model data. Then, the second device trains the second model data, to obtain the first model data that is after the current round of training.

605. The second device quantizes the first model data in a first quantization manner.

606. The second device determines a first quantization error based on quantized first model data and the first model data that is before the quantization.

607. The second device sends a fourth message to the first device, where the fourth message includes the first quantization error and first information, the first information includes an evaluation loss corresponding to the current round of training, and the fourth message is used by the first device to determine whether the second device is allowed to send the quantized first model data.

608. The first device receives the fourth message sent by the second device.

609. The first device determines, based on the first quantization error and the first information, whether the second device is allowed to send the quantized first model data.

Specifically, optionally, the first device determines a proportion of quantifiable second devices based on evaluation losses that correspond to the current round of training and that are sent by different second devices. Specifically, a total evaluation loss is calculated based on the evaluation losses corresponding to the different second devices, and the total evaluation loss may describe a status of the current round of training. For example, when the total evaluation loss is high, it indicates that training is far from been converged, a quantization error tolerance is high, and the proportion of the quantifiable second devices is correspondingly high.

Specifically, optionally, the first device determines a proportion of quantifiable second devices based on evaluation losses that correspond to the current round of training and that are sent by different second devices, the information about the accuracy requirement of the second device for model training, and the communication sensitivity information. For example, when the total evaluation loss corresponding to the current round of training is high, an accuracy requirement of the second device is low, and communication sensitivity of the second device is high, the first device determines a large proportion of quantifiable second devices. When the total evaluation loss corresponding to the current round of training is low, an accuracy requirement of the second device is high, and communication sensitivity of the second device is low, the first device determines a small proportion of quantifiable second devices.

Optionally, the first device may determine, based on the proportion of the quantifiable second devices and the first quantization error, whether the second device is allowed to send the quantized first model data. Specifically, first quantization errors sent by different second devices are sorted in ascending order, and a second device with a small first quantization error value is determined, based on the proportion of the quantifiable second devices, as a device that is allowed to send the quantized first model data.

The first device determines, based on the evaluation loss corresponding to the current round of training and the first quantization error determined after the second device quantizes the first model data, and indicates whether the second device can send the quantized first model data, so that excessive accumulation of the first quantization error of the second device can be avoided, thereby reducing an accuracy loss of model data.

Optionally, the first device may determine, based on the proportion of the quantifiable second devices, the first quantization error, and a threshold for a quantity of consecutive quantization times, whether the second device is allowed to send the quantized first model data. Specifically, first quantization errors sent by different second devices are sorted in ascending order, a second device with a small first quantization error value is selected based on the proportion of the quantifiable second devices, screening is performed based on the preset threshold for the quantity of consecutive quantization times, a second device whose quantity of consecutive quantization times exceeds the threshold is screened out, and a second device with a small first quantization error value and whose quantity of consecutive quantization times does not exceed the threshold is determined as a device that is allowed to send the quantized first model data. If no sufficient second devices are found, the proportion of the quantifiable second devices may be reduced until sufficient second devices are found.

The first device determines, based on the evaluation loss corresponding to the current round of training, the first quantization error determined after the second device quantizes the first model data, and the threshold for the quantity of consecutive quantization times, and indicates whether the second device can send the quantized first model data, so that the second device can be prevented from performing quantization for a quantity of times exceeding the threshold for the quantity of consecutive quantization times, to reduce an accuracy loss of model data.

610. The first device sends indication information to the second device, where the indication information indicates whether the second device is allowed to send the quantized first model data.

611. The second device receives the indication information sent by the first device.

612. The second device determines, based on the indication information, whether to send the quantized first model data to the first device.

Specifically, optionally, if the indication information indicates that the second device is allowed to send the quantized first model data, the second device sends the quantized first model data and third quantization configuration information to the first device; or if the indication information indicates that the second device is not allowed to send the quantized first model data, the second device sends the first model data that is unquantized. The third quantization configuration information is used by the first device to perform dequantization parsing on the quantized first model data. The third quantization configuration information includes a quantity of quantized bits of the first model data, uniform quantization or non-uniform quantization, a quantized zero point, an offset value, a scaling factor, and the like.

If the first device receives the quantized first model data sent by the second device, dequantization parsing is performed on the quantized first model data, to obtain model data that facilitates subsequent model aggregation, for example, obtain 32-bit floating-point model data through parsing. If the first device receives the first model data that is unquantized and that is sent by the second device, dequantization parsing does not need to be performed.

After the first device collects model parameter files uploaded by all second devices participating in the current round of training or after a maximum time limit is reached, the first device aggregates, by using an aggregation algorithm such as a federated averaging algorithm, the parameter files uploaded by the second devices, to update a model parameter.

The first device determines whether a training stop condition is met. If the training stop condition is not met, step 603 is returned to perform a next round of training and aggregation procedure. Otherwise, the current procedure ends.

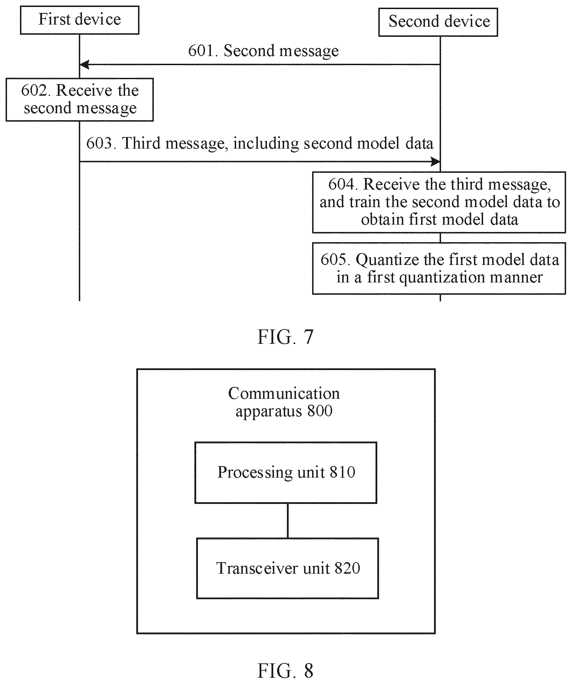

FIG. 7 shows another model data sending method provided in an embodiment of this application. The method may be applied to federated learning. The method includes the following steps.

701. A second device sends a registration message to a first device, where the registration message may be referred to as a second message, and the second message includes information about the second device. Optionally, the second message may include model accuracy requirement (accuracy requirement) information and communication sensitivity (communication sensitivity) information of the second device. There may be a plurality of second devices. The first device may be a radio access network device, and the second device may be a terminal device; the first device may be an element management system/network management system, and the second device may be a radio access network device; the first device may be a central network data analytics function, and the second device may be a local network data analytics function; or the like. This is not limited in this embodiment of this application.

702. The first device receives the second message sent by the second device, and selects, based on the second message, the second device to participate in model training.

703. The first device sends a third message to the second device participating in a current round of training, where the third message includes quantized second model data and second quantization configuration information, the second model data is model data that is before the current round of training, and the third message is used by the second device to train the second model data to obtain trained first model data. The second quantization configuration information is a quantization solution of the second model data, and may include information such as a quantity of quantized bits of each layer, an offset value of each layer, and a scaling factor. The information may help the second device obtain the second model data through dequantization parsing.

Specifically, the first device may determine a proportion of quantifiable layers in the second model data based on third information. The third information includes evaluation loss information of a previous round of training, information about an accuracy requirement of the second device for a model, and communication sensitivity information. For example, when an evaluation loss in a previous round is high, an accuracy requirement of the second device is low, and communication sensitivity of the second device is high, the first device determines a large proportion of quantifiable layers in the second model data; or when an evaluation loss in a previous round is low, an accuracy requirement of the second device is high, and communication sensitivity of the second device is low, the first device determines a small proportion of quantifiable layers in the second model data.

It should be understood that different layers in model data may be understood as different layers in a neural network (neural network, NN). The neural network is an artificial neural network, and is a mathematical model or a computing model that simulates a structure and a function of a biological neural network. The neural network is for estimating or approximating a function, and may complete functions such as classification and regression. Common neural networks include a convolutional neural network, a recursive neural network, and the like.

The first device pre-quantizes each layer of data in the second model data. Optionally, the first device may determine a quantization error corresponding to each layer of data and a compression amount contributed by each layer of data.

Optionally, the first device may determine the quantifiable layers in the second model data based on the determined proportion of the quantifiable layers. For example, if the second model data has a total of six layers, and it is determined that the proportion of the quantifiable layers is 1/2, the first device may determine any three layers as the quantifiable layers.

Optionally, the first device may determine the quantifiable layers in the second model data based on the determined proportion of the quantifiable layers and the quantization error corresponding to each layer of data. Specifically, the first device may determine a layer with a small quantization error as a quantifiable layer based on the proportion of the quantifiable layers.

Optionally, the first device may determine the quantifiable layers in the second model data based on the determined proportion of the quantifiable layers and the compression amount contributed by each layer of data. Specifically, the first device may determine a layer with a large contributed compression amount as a quantifiable layer based on the proportion of the quantifiable layers.

Optionally, the first device may determine the quantifiable layers in the second model data based on the determined proportion of the quantifiable layers, the quantization error corresponding to each layer of data, and the compression amount contributed by each layer of data.

The first device obtains quantized second model data, where data corresponding to the quantifiable layers in the quantized second model data is quantized, and data corresponding to an unquantifiable layer in the quantized second model data is not quantized.

The first device performs hierarchical quantization on a model delivered to the second device, so that accumulation of multi-round quantization errors can be controlled, thereby reducing an accuracy loss of model data when a transmission amount is reduced.

It should be understood that the second model data that is sent by the first device to the second device and that is before the current round of training may alternatively be unquantized. This is not limited in this application.

An embodiment of this application provides a communication apparatus 800. The communication apparatus may be applied to the first device in the method embodiment in FIG. 5, or may be a component, for example, a chip, for implementing the method in the embodiment in FIG. 5. FIG. 8 is a schematic block diagram of the communication apparatus 800 according to this embodiment of this application. The communication apparatus 800 includes:
a processing unit 810, configured to determine second information based on first information, where the second information is used by a second device to quantize first model data, the first information includes an evaluation loss corresponding to a current round of training, the second information includes a quantization error threshold, and the first model data is model data that is after the current round of training; and
a transceiver unit 820, configured to send the second information to the second device.

The transceiver unit 820 is further configured to receive a first message sent by the second device, where the first message includes quantized first model data and first quantization configuration information.

Optionally, the first information further includes information about an accuracy requirement of the second device for model training and communication sensitivity information.

Optionally, the transceiver unit 820 is further configured to receive a second message sent by the second device, where the second message includes information about the accuracy requirement and the communication sensitivity information.

Optionally, the processing unit 810 is further configured to determine a proportion of quantifiable layers in second model data based on third information, where the third information includes an evaluation loss corresponding to a previous round of training, the information about the accuracy requirement, and the communication sensitivity information, and the second model data is model data that is before the current round of training.

The processing unit 810 is further configured to quantize the second model data based on the proportion of the quantifiable layers, to obtain quantized second model data.

The transceiver unit 820 is further configured to send a third message to the second device, where the third message includes the quantized second model data and second quantization configuration information, and the third message is used by the second device to train the second model data to obtain the first model data.

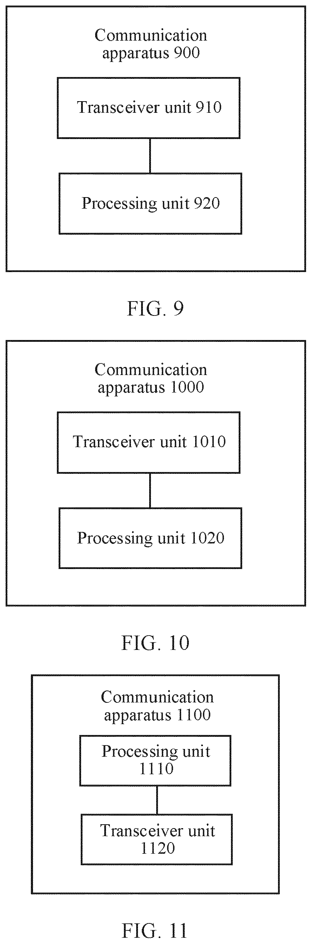

An embodiment of this application provides a communication apparatus 900. The communication apparatus may be applied to the second device in the method embodiment in FIG. 5, or may be a component, for example, a chip, for implementing the method in the embodiment in FIG. 5. FIG. 9 is a schematic block diagram of the communication apparatus 900 according to this embodiment of this application. The communication apparatus 900 includes:
a transceiver unit 910, configured to receive second information sent by a first device, where the second information is used by the second device to quantize first model data, the second information includes a quantization error threshold, and the first model data is model data that is after a current round of training; and
a processing unit 920, configured to quantize the first model data based on the second information.

The transceiver unit 910 is further configured to send a first message to the first device, where the first message includes quantized first model data and first quantization configuration information.

Optionally, the processing unit 920 is specifically configured to: quantize the first model data in a first quantization manner; determine a first quantization error based on quantized first model data and the first model data that is before the quantization; and if the first quantization error is less than the quantization error threshold, determine to use the first quantization manner to quantize the first model data.

Optionally, the transceiver unit 910 is further configured to receive a third message sent by the first device, where the third message includes quantized second model data and second quantization configuration information, and the second model data is model data that is before the current round of training.

The processing unit 920 is further configured to perform dequantization parsing based on the quantized second model data and the second quantization configuration information to obtain the second model data.

The processing unit 920 is further configured to train the second model data, to obtain the first model data.

An embodiment of this application provides a communication apparatus 1000. The communication apparatus may be applied to the first device in the method embodiment in FIG. 6, or may be a component, for example, a chip, for implementing the method in the embodiment in FIG. 6. FIG. 10 is a schematic block diagram of the communication apparatus 1000 according to this embodiment of this application. The communication apparatus 1000 includes:
a transceiver unit 1010, configured to receive a fourth message sent by a second device, where the fourth message includes a first quantization error and first information, the first quantization error is determined after the second device quantizes first model data in a first quantization manner, the first information includes an evaluation loss corresponding to a current round of training, and the first model data is model data that is after the current round of training; and
a processing unit 1020, configured to determine, based on the first quantization error and the first information, whether the second device is allowed to send quantized first model data.

The transceiver unit 1010 is further configured to send indication information to the second device, where the indication information indicates whether the second device is allowed to send the quantized first model data.

Optionally, the processing unit 1020 is specifically configured to: determine a proportion of quantifiable second devices based on the first information; and determine, based on the proportion of the quantifiable second devices, the first quantization error, and a threshold for a quantity of consecutive quantization times, whether the second device is allowed to send the quantized first model data.

Optionally, the first information further includes information about an accuracy requirement of the second device for model training and communication sensitivity information.

Optionally, the transceiver unit 1010 is further configured to receive a second message sent by the second device, where the second message includes information about the accuracy requirement and the communication sensitivity information.

Optionally, the processing unit 1020 is further configured to determine a proportion of quantifiable layers in second model data based on third information, where the third information includes an evaluation loss corresponding to a previous round of training, the information about the accuracy requirement, and the communication sensitivity information, and the second model data is model data that is before the current round of training.

The processing unit 1020 is further configured to quantize the second model data based on the proportion of the quantifiable layers, to obtain quantized second model data.

The transceiver unit 1010 is further configured to send a third message to the second device, where the third message includes the quantized second model data and second quantization configuration information, and the third message is used by the second device to train the second model data to obtain the first model data.

An embodiment of this application provides a communication apparatus 1100. The communication apparatus may be applied to the second device in the method embodiment in FIG. 6, or may be a component, for example, a chip, for implementing the method in the embodiment in FIG. 6. FIG. 11 is a schematic block diagram of the communication apparatus 1100 according to this embodiment of this application. The communication apparatus 1100 includes:
a processing unit 1110, configured to quantize first model data in a first quantization manner, where the first model data is model data that is after a current round of training, where
the processing unit 1110 is further configured to determine a first quantization error based on quantized first model data and the first model data that is before the quantization; and
a transceiver unit 1120, configured to send a fourth message to a first device, where the fourth message includes the first quantization error and first information, the fourth message is used by the first device to determine whether the second device is allowed to send the quantized first model data, and the first information includes an evaluation loss corresponding to the current round of training.

The transceiver unit 1120 is further configured to receive indication information sent by the first device, where the indication information indicates whether the second device is allowed to send the quantized first model data.

The processing unit 1110 is further configured to determine, based on the indication information, whether to send the quantized first model data to the first device.

Optionally, the processing unit 1110 is specifically configured to: if the indication information indicates that the second device is allowed to send the quantized first model data, send the quantized first model data and third quantization configuration information to the first device; or if the indication information indicates that the second device is not allowed to send the quantized first model data, send the first model data that is unquantized.

Optionally, the transceiver unit 1120 is further configured to receive a third message sent by the first device, where the third message includes quantized second model data and second quantization configuration information, and the second model data is model data that is before the current round of training.

The processing unit 1110 is further configured to perform dequantization parsing based on the quantized second model data and the second quantization configuration information to obtain the second model data.

The processing unit 1110 is further configured to train the second model data, to obtain the first model data.

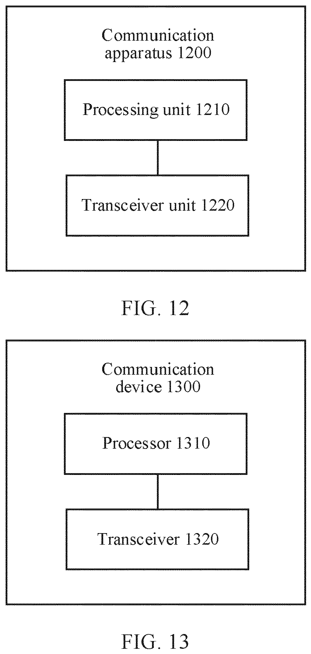

An embodiment of this application provides a communication apparatus 1200. The communication apparatus may be applied to the first device in the method embodiment in FIG. 7, or may be a component, for example, a chip, for implementing the method in the embodiment in FIG. 7. FIG. 12 is a schematic block diagram of the communication apparatus 1200 according to this embodiment of this application. The communication apparatus 1200 includes:
a processing unit 1210, configured to determine a proportion of quantifiable layers in second model data based on third information, where the third information includes an evaluation loss corresponding to a previous round of training, information about an accuracy requirement of a second device for model training, and communication sensitivity information, and the second model data is model data that is before a current round of training, where

The processing unit 1210 is further configured to quantize the second model data based on the proportion of the quantifiable layers, to obtain quantized second model data; and
a transceiver unit 1220, configured to send a third message to the second device, where the third message includes the quantized second model data and second quantization configuration information, and the third message is used by the second device to train the second model data.

Optionally, the processing unit 1210 is specifically configured to: quantize each layer of data in the second model data; determine a quantization error corresponding to each layer of data and a compression amount contributed by each layer of data; determine the quantifiable layers in the second model data based on the proportion of the quantifiable layers, the quantization error corresponding to each layer of data, and/or the compression amount contributed by each layer of data; and obtain the quantized second model data, where data corresponding to the quantifiable layers in the quantized second model data is quantized, and data corresponding to an unquantifiable layer in the quantized second model data is not quantized.

An embodiment of this application provides a communication device 1300. FIG. 13 is a schematic block diagram of the communication device 1300 according to this embodiment of this application. The communication device 1300 includes:
a processor 1310 and a transceiver 1320, where the transceiver 1320 is configured to: receive computer code or instructions, and transmit the computer code or the instructions to the processor, and the processor 1310 runs the computer code or the instructions, to implement the methods in embodiments of this application.

The foregoing processor may be an integrated circuit chip, and has a signal processing capability. In an implementation process, steps in the foregoing method embodiments can be implemented by using a hardware integrated logical circuit in the processor, or by using instructions in a form of software. The foregoing processor may be a general purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and the processor reads a message in the memory and completes the steps in the foregoing method in combination with hardware of the processor.

An embodiment of this application further provides a computer-readable storage medium. The computer-readable storage medium stores a computer program used to implement the method in the foregoing method embodiments. When the computer program is run on a computer, the computer is enabled to implement the method in the foregoing method embodiments.

In addition, the term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. The term "at least one" in this application may represent "one" and "two or more". For example, at least one of A, B, and C may indicate the following seven cases: Only A exists, only B exists, only C exists, both A and B exist, both A and C exist, both C and B exist, and A, B, and C exist.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A model data sending method, applied to federated learning and comprising:
determining, by a first device, second information based on first information, wherein the second information is used by a second device to quantize first model data, the first information comprises an evaluation loss corresponding to a current round of training, the second information comprises a quantization error threshold, and the first model data is model data that is after the current round of training;
sending, by the first device, the second information to the second device; and
receiving, by the first device, a first message sent by the second device, wherein the first message comprises quantized first model data and first quantization configuration information.

2. The method according to claim 1, wherein the first information further comprises information about an accuracy requirement of the second device for model training and communication sensitivity information.

3. The method according to claim 2, wherein before the determining, by a first device, second information based on first information, the method further comprises:
receiving, by the first device, a second message sent by the second device, wherein the second message comprises information about the accuracy requirement and the communication sensitivity information.

4. The method according to claim 2 or 3, wherein before the determining, by a first device, second information based on first information, the method further comprises:
determining, by the first device, a proportion of quantifiable layers in second model data based on third information, wherein the third information comprises an evaluation loss corresponding to a previous round of training, the information about the accuracy requirement, and the communication sensitivity information, and the second model data is model data that is before the current round of training;
quantizing, by the first device, the second model data based on the proportion of the quantifiable layers, to obtain quantized second model data; and
sending, by the first device, a third message to the second device, wherein the third message comprises the quantized second model data and second quantization configuration information, and the third message is used by the second device to train the second model data to obtain the first model data.

5. A data sending method, applied to federated learning and comprising:
receiving, by a second device, second information sent by a first device, wherein the second information is used by the second device to quantize first model data, the second information comprises a quantization error threshold, and the first model data is model data that is after a current round of training;
quantizing, by the second device, the first model data based on the second information; and
sending, by the second device, a first message to the first device, wherein the first message comprises quantized first model data and first quantization configuration information.

6. The method according to claim 5, wherein the quantizing, by the second device, the first model data based on the second information comprises:
quantizing, by the second device, the first model data in a first quantization manner;
determining, by the second device, a first quantization error based on the quantized first model data and the first model data that is before the quantization; and
if the first quantization error is less than the quantization error threshold, determining, by the second device, to use the first quantization manner to quantize the first model data.

7. The method according to claim 5 or 6, wherein before the receiving, by a second device, second information sent by a first device, the method further comprises:
receiving, by the second device, a third message sent by the first device, wherein the third message comprises quantized second model data and second quantization configuration information, and second model data is model data that is before the current round of training;
performing, by the second device, dequantization parsing based on the quantized second model data and the second quantization configuration information to obtain the second model data; and
training, by the second device, the second model data, to obtain the first model data.

8. A data sending method, applied to federated learning and comprising:
receiving, by a first device, a fourth message sent by a second device, wherein the fourth message comprises a first quantization error and first information, the first quantization error is determined after the second device quantizes first model data in a first quantization manner, the first information comprises an evaluation loss corresponding to a current round of training, and the first model data is model data that is after the current round of training;
determining, by the first device based on the first quantization error and the first information, whether the second device is allowed to send quantized first model data; and
sending, by the first device, indication information to the second device, wherein the indication information indicates whether the second device is allowed to send the quantized first model data.

9. The method according to claim 8, wherein the determining, by the first device based on the first quantization error and the first information, whether the second device is allowed to send quantized first model data comprises:
determining, by the first device, a proportion of quantifiable second devices based on the first information; and
determining, by the first device based on the proportion of the quantifiable second devices, the first quantization error, and a threshold for a quantity of consecutive quantization times, whether the second device is allowed to send the quantized first model data.

10. The method according to claim 8 or 9, wherein the first information further comprises information about an accuracy requirement of the second device for model training and communication sensitivity information.

11. The method according to claim 10, wherein before the receiving, by a first device, a fourth message sent by a second device, the method further comprises:
receiving, by the first device, a second message sent by the second device, wherein the second message comprises information about the accuracy requirement and the communication sensitivity information.

12. The method according to any one of claims 9 to 11, wherein before the receiving, by a first device, a fourth message sent by a second device, the method further comprises:
determining, by the first device, a proportion of quantifiable layers in second model data based on third information, wherein the third information comprises an evaluation loss corresponding to a previous round of training, the information about the accuracy requirement, and the communication sensitivity information, and the second model data is model data that is before the current round of training;
quantizing, by the first device, the second model data based on the proportion of the quantifiable layers, to obtain quantized second model data; and
sending, by the first device, a third message to the second device, wherein the third message comprises the quantized second model data and second quantization configuration information, and the third message is used by the second device to train the second model data to obtain the first model data.

13. A data sending method, applied to federated learning and comprising:
quantizing, by a second device, first model data in a first quantization manner, wherein the first model data is model data that is after a current round of training;
determining, by the second device, a first quantization error based on quantized first model data and the first model data that is before the quantization;
sending, by the second device, a fourth message to a first device, wherein the fourth message comprises the first quantization error and first information, the fourth message is used by the first device to determine whether the second device is allowed to send the quantized first model data, and the first information comprises an evaluation loss corresponding to the current round of training;
receiving, by the second device, indication information sent by the first device, wherein the indication information indicates whether the second device is allowed to send the quantized first model data; and
determining, by the second device based on the indication information, whether to send the quantized first model data to the first device.

14. The method according to claim 13, wherein the determining, by the second device based on the indication information, whether to send the quantized first model data to the first device comprises:
if the indication information indicates that the second device is allowed to send the quantized first model data, sending, by the second device, the quantized first model data and third quantization configuration information to the first device; or
if the indication information indicates that the second device is not allowed to send the quantized first model data, sending, by the second device, the first model data that is unquantized.

15. The method according to claim 13 or 14, wherein before the quantizing, by the second device, the first model data in a first quantization manner, the method further comprises:
receiving, by the second device, a third message sent by the first device, wherein the third message comprises quantized second model data and second quantization configuration information, and the second model data is model data that is before the current round of training;
performing, by the second device, dequantization parsing based on the quantized second model data and the second quantization configuration information to obtain the second model data; and
training, by the second device, the second model data, to obtain the first model data.

16. A model data sending method, applied to federated learning and comprising:
determining, by a first device, a proportion of quantifiable layers in second model data based on third information, wherein the third information comprises an evaluation loss corresponding to a previous round of training, information about an accuracy requirement of a second device for model training, and communication sensitivity information, and the second model data is model data that is before a current round of training;
quantizing, by the first device, the second model data based on the proportion of the quantifiable layers, to obtain quantized second model data; and
sending, by the first device, a third message to the second device, wherein the third message comprises the quantized second model data and second quantization configuration information, and the third message is used by the second device to train the second model data.

17. The method according to claim 16, wherein the quantizing, by the first device, the second model data based on the proportion of the quantifiable layers comprises:
quantizing, by the first device, each layer of data in the second model data;
determining, by the first device, a quantization error corresponding to each layer of data and a compression amount contributed by each layer of data;
determining, by the first device, the quantifiable layers in the second model data based on the proportion of the quantifiable layers, the quantization error corresponding to each layer of data, and/or the compression amount contributed by each layer of data; and
obtaining, by the first device, the quantized second model data, wherein data corresponding to the quantifiable layers in the quantized second model data is quantized, and data corresponding to an unquantifiable layer in the quantized second model data is not quantized.

18. A communication apparatus, comprising a unit configured to implement a function of the method according to any one of claims 1 to 17.

19. A communication device, comprising a processor and a transceiver, wherein the transceiver is configured to: receive computer code or instructions, and transmit the computer code or the instructions to the processor, and the processor runs the computer code or the instructions, to perform the method according to any one of claims 1 to 17.

20. A computer-readable storage medium, wherein
the computer-readable medium stores a computer program; and
when the computer program is run on a computer, the computer is enabled to perform the method according to any one of claims 1 to 17.
